# EUROPÄISCHE PATENTANMELDUNG

(11) **EP 1 377 020 A2**
(43) Veröffentlichungstag der Anmeldung: **02.01.2004**
(21) Anmeldenummer: 03101713.0
(22) Anmeldetag: 12.06.2003
(51) Int. Cl.: H04N 1/028

(54) **Flexibler Seitenscanner**

(30) Priorität: 24.06.2002 DE 10233610
(71) Anmelder: SIEMENS AKTIENGESELLSCHAFT, 80333 München (DE)
(72) Erfinder: Neddermeyer, Andreas, 81675, München (DE)

(57) **Zusammenfassung**

Die Erfindung betrifft einen flexiblen Seitenscanner (FS) zum Einscannen von Grafiken und/oder Texten (D). Erfindungsgemäß weist der Seitenscanner 8FS) eine flächige Struktur von Scanelementen (SE) auf, wobei die Scanelemente (SE) jeweils mindestens einen Fotosensor (FR) und mindestens einen Lichtemitter (LE) enthalten.

## Beschreibung

Die Erfindung betrifft einen flexiblen Seitenscanner.

Um Informationen vom Papier in einen Computer einzulesen ist üblicherweise ein großer und mechanisch komplexer Scanner notwendig. In handelsüblichen Scannern fährt ein Schlitten, bestehend aus einer Beleuchtungseinheit und einer Sensoreinheit, das Dokument ab und liest so die Informationen ein. Der Scanvorgang kann je nach Bildqualität und Scanner mehrere Minuten dauern. Die meisten der üblichen Scanner sind für den stationären Gebrauch vorgesehen. Es gibt nur wenige, die sich für einen mobilen Einsatz eignen.

Der Erfindung liegt die Aufgabe zugrunde, die Verwendung von Scannern, insbesondere für den mobilen Gebrauch, für den Benutzer zu vereinfachen.

Diese Aufgabe wird erfindungsgemäß durch die im Patentanspruch angegebenen Merkmale gelöst.

Im Folgenden wird die Erfindung anhand eines in der Zeichnung dargestellten Ausführungsbeispieles beschrieben.

Dabei zeigen
Figur 1 den erfindungsgemäßen Seitenscanner in Draufsicht, und
Figur 2 den Seitenscanner im Schnitt.

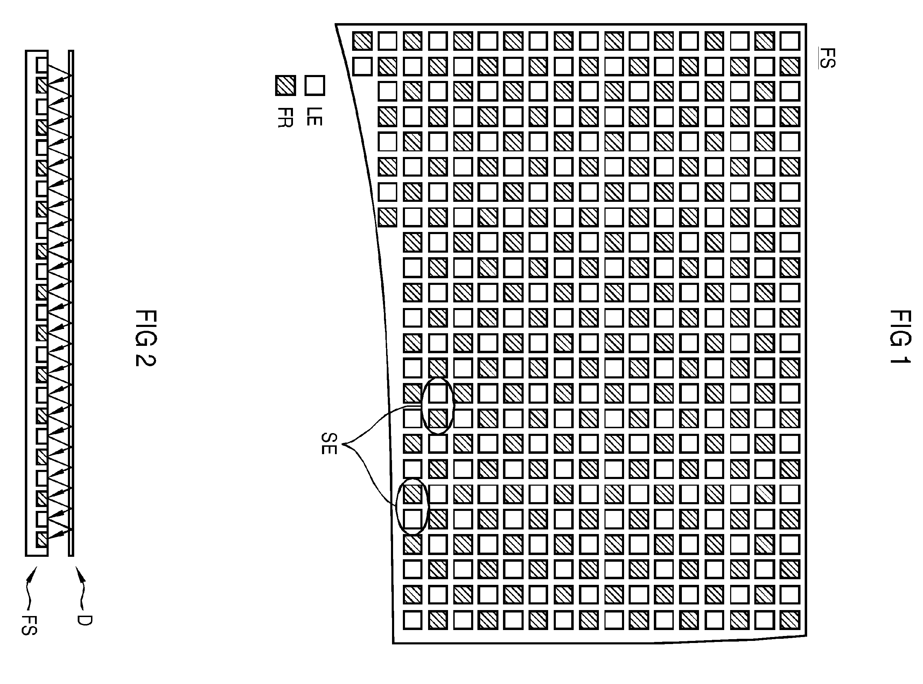

Der in Figur 1 dargestellte erfindungsgemäße flexible Seitenscanner FS weist eine flächige Struktur von Scanelementen SE auf. Die Größe des Scanners FS entspricht beispielsweise der Größe einer DIN A4-Seite. Bei dem gewählten Ausführungsbeispiel weist jedes Scanelement einen Lichtemitter LE und einen Fotosensor FR auf. Bei der gewählten Anordnung ergibt sich in Spalten und Reihen eine jeweils abwechselnde Folge von Lichtemittern LE und Fotosensoren FR.

In Figur 2 ist der Scanner FS im Querschnitt dargestellt, wobei in einem vorgegebenen Abstand zu den Lichtemittern LE und Fotosensoren FR ein Dokument D aufliegt. Dieses Dokument D weist üblicherweise textuelle und/oder graphische Inhalte auf.

Durch die Anordnung der Scanelemente SE wird sozusagen pixelweise das von den zugehörigen Lichtemittern LE ausgehende Licht von den Fotosensoren FR empfangen und die darin enthaltene Information beziehungsweise die im Dokument D enthaltenen Strukturen ausgewertet.

Durch die vorgehende Struktur von Fotosensoren FR sowohl in X- als auch in Y-Richtung, gibt es eine feste Anzahl von Sensorelementen, durch die die maximale Auflösung des Scanners bestimmt ist.

Die Herstellung von flexiblen Fotosensoren ist beispielsweise in dem Artikel "Active Matrix Amorphous Silicon Photo-Sensor Array for Flexible Substrate" (ISSN/0001-0966X/01/3201-0052-$1.00+.00©2001 SID) beschrieben.

Zur Beleuchtung des Dokumentes D sind die Lichtemitter LE vorgesehen. Diese Lichtemitter sind in der gleichen Technologie wie flexible Displays herstellbar.

Die Herstellung flexibler Displays ist beispielsweise in dem Artikel "AMLCDs using Organic Thin-Film Transistors on Polyester Substrates" (ISSN/0001-0966X/01/3201-0057-$1.00+.00©2001 SID) beschrieben.

Letztlich gesteht der erfindungsgemäße flexible Seitenscanner FS aus von einem flexiblen Trägermaterial, in dem oder auf dem die Strukturen der Scanelemente SE realisiert sind.

Weiter ist vorzugsweise eine darüber liegende transparente Schutzfolie vorgesehen.

## Patentansprüche

1. Flexibler Seitenscanner (FS) zum Einscannen von Grafiken und/oder Texten (D),
bei dem der Seitenscanner 8FS) eine flächige Struktur von Scanelementen (SE) aufweist, wobei die Scanelemente (SE) jeweils mindestens einen Fotosensor (FR) und mindestens einen Lichtemitter (LE) enthalten.
